# EUROPEAN PATENT APPLICATION

(11) **EP 0 568 702 A1**
(43) Date of publication of application: **10.11.1993**
(21) Application number: 92923184.3
(22) Date of filing: 05.11.1992
(51) Int. Cl.: H01J 29/88

(54) **CATHODE-RAY TUBE**

(30) Priority: 05.11.1991 JP 288950/91
(71) Applicant: MITSUBISHI DENKI KABUSHIKI KAISHA, Tokyo 100 (JP)
(72) Inventor: OKUDA, Hiroshi Mitsubishi Denki K.K., Nagaokakyo-shi Kyoto 617 (JP); YAMAGUCHI, Tetsuya Mitsubishi Denki Engineering KK, Nagaokakyo-shi Kyoto 617 (JP)
(74) Representative: Reitzle, Helmut, Dr.
(86) International application number: JP9201428
(87) International publication number: WO9309559

(57) **Abstract**

A cathode-ray tube, wherein on the outer surface of the face plate, stuck is a glass panel on which a transparent indium oxide conductive film electrically grounded is formed, and wherein to this conductive film, added is an antireflection film and a silica film. Thereby, in an antistatic treated type CRT, blocked is the alternate electric field of a VLF band, which has a possibility of giving a harmful effect to human organism, and realized are an antireflection function and a glare-proof function both which reduce eyestrain.

## Description

### Field of the Invention

This invention relates to a cathode-ray tube and more particularly to a charge-resistant cathode-ray tube which comprises a glass panel, etc., having conductivity on the outer surface of the face plate and having an alternating field screening effect and a glare proof effect or low reflection effect.

### Background of the Invention

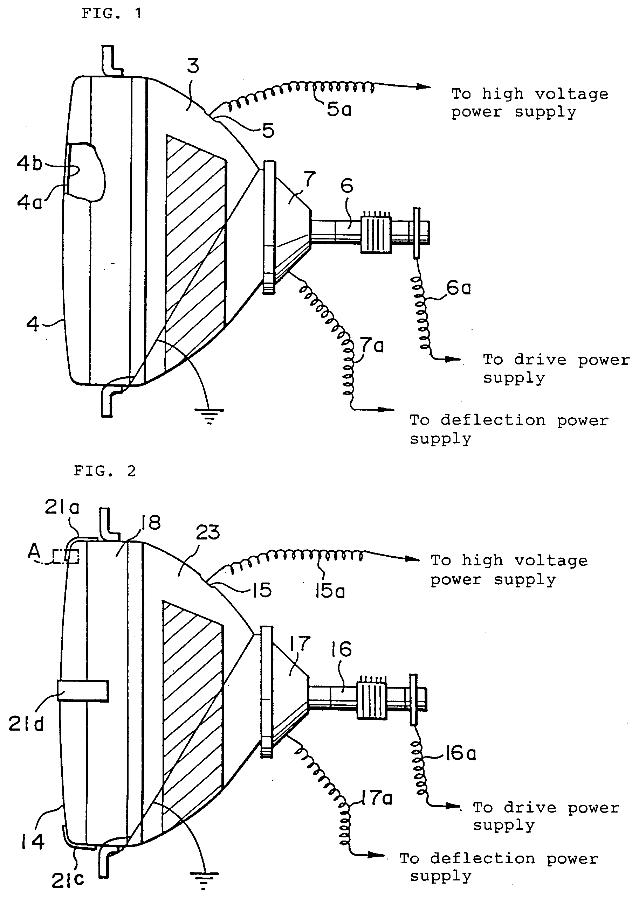

Figure 1 is a side view of the general structure of a cathode-ray tube (CRT), wherein the CRT is made up of a neck section 6 containing an electron gun, a deflecting yoke 7, a funnel section 3, a face plate 4, and a high voltage button 5. The reflecting yoke 7 is connected via a lead wire 7a to a reflection power supply. The electron gun of the neck section 6 is connected via a lead wire 6a to a drive power supply. The high voltage button 5 is connected via a lead wire 5a to a high voltage power supply. The inner part of a glass panel 4a forming the face plate 4 is formed with a fluorescent screen 4b.

In operation, an electron beam emitted from the electron gun contained in the neck section 6 is reflected electromagnetically by the deflecting yoke 7. The deflected electron beam is accelerated by a high voltage applied to the fluorescent screen 4b, causing the fluorescent screen 4b to be excited causing light emission for light output.

As understood from the description above, the cathode-ray tube (CRT) has a feature of a high voltage applied to the face plate 4 due to the operation principles, whereby a high voltage is applied to the fluorescent screen 4b on the inside of the face plate 4 to accelerate the electron beam. For example, a high voltage exceeding 20 kV is generally adopted to be applied to a conventional cathode-ray tube (CRT). However, with high intensity and high resolution of recent CRTs, a high voltage exceeding 25 kV is designed to be applied to a display monitor CRT and a high voltage exceeding 30 kV to a color television CRT.

When a high voltage is applied to the fluorescent screen 4b of the inner face of the face plate 4, the outer face of the face plate will be charged up. Thus, when the set power supply is turned on or off, the outer face of the face plate 4 of a CRT to which charge resistance treatment is not given is charged up, discharging to the observer who approaches the face plate 4 and giving him or her an unpleasant sensation sometimes in the form of an electric shock. When the outer face of the face plate 4 is charged up, dust in the air adheres to the outer face of the face plate 4, thus dirt on the outer face of the CRT is noticeable, and as a result, the picture quality of the CRT is also degraded.

To remove the harmful effect of such a discharge phenomenon, a conductive coating is applied to the outer face of the face plate 4 or the glass panel 4a having a conductive film (coating or glass panel) is put on the outer face of the face plate 4 for preventing the outer face of the face plate 4 from being charged up. With such charge-resistant CRTs, the conductive films form an electric field shield and electricity collected on the field shield is grounded to prevent charging up from occurring.

Antimony-containing tin oxide is adopted as the material of conductive films used for conventional charge-resistant CRTs. Specifically, coating material with fine grains of antimony-containing tin oxide as a filler is applied to the glass panel 4a for forming the transparent conductive films.

Such a transparent conductive film made of antimony-containing tin oxide has a resistance of about 10⁹ Ω. The resistance value is fairly large as a resistance value of a conductive film, although it is sufficient for charge prevention, namely, grounding charge up.

However, in recent years, the harmful effects of electro-magnetic waves to human bodies have become the subject of much discussion, and with respect to display monitors such as CRTs, the harmful effects of an alternating field emitted mainly from a deflecting yoke to the human bodies have also been feared. From viewpoints of preventing the harmful effects of the electro-magnetic wave emitted from display monitors to human being, in 1991, various bodies (MPR-11), (TCO), etc., defined the standards for allowable electro-magnetic waves leaked from display monitors.

Table 1 lists the standards. As seen from the table, the TCO standard specifies that the alternating fields at 2 kHz to 400 kHz (namely, VLF band) of electro-magnetic waves emitted from display monitors should be 1.0 V/m or less at a point of 30 cm distant from the CRT face plate and that the alternating fields at 5 Hz to 2 kHz (namely, ELF band) should be 10 V/m or less.

**Table 1**

| | ELF band | VLF band | Test conditions |
|---|---|---|---|
| | 5Hz-2KHz | 2kHz-400kHz | |
| MPR-II | 25V/m or less | 2.5V/m or less | (1) |
| TCO | 10V/m or less | 1.0V/m or less | (2) |
| (1) Temperature 20°C, humidity 21% at a point of 50 cm distant from CRT face (2) Temperature 20°C, humidity 21% at a point of 30 cm distant from CRT face | | | |

However, it is very difficult to take screen countermeasures against the alternating fields particularly in the VLF band of 2 kHz to 400 kHz for the conventional charge-resistant CRTs. Therefore, the conventional charge-resistant CRTs introduce a problem that the electro-magnetic waves of the alternating fields in the VLF band of 2 kHz to 400 kHz are passed through the CRT face panels and adversely affect the observer's bodies.

### Summary of the Invention

Accordingly, it is an object of the invention to provide a cathode-ray tube (CRT) which shields human bodies from an alternating field in the VLF band of 2 kHz to 400 kHz of electro-magnetic waves emitted from display monitors.

It is another object of the invention to provide a CRT which relieves viewer's eyestrain.

To these ends, according to the invention, there is provided a CRT which shields human bodies from an alternating field in a VLF band of 2 kHz to 400 kHz by using a transparent conductive film with a small resistance value.

The CRT according to the invention comprises a transparent conductive film with which the outer face of a face panel is coated and a plurality of terminals, connection points to ground, disposed at margins of the transparent conductive film. Thus, a potential occurring on the outer face of the face panel is relieved via the terminals. With the CRT according to the invention, the resistance value between the terminals is set to 5 x 10³ Ω or less when the horizontal scanning frequency of 30 kHz or higher is used and 3 x 10³ Ω or less when the horizontal scanning frequency of 45 kHz or higher is used.

Preferably, the transparent conductive film used with the invention is an indium oxide transparent conductive film. The indium oxide transparent conductive film can comprise paint containing fine grains of indium oxide as a filler applied directly to the face plate, for example.

According to another embodiment of the invention, there is provided a CRT which comprises a reflection prevention film to relieve viewer's eyestrain. For this purpose, a panel or film formed with a reflection prevention film containing at least one indium oxide transparent conductive layer is put on the face plate face.

To relieve view's eyestrain, a glare proof treatment may be given after the indium oxide film is formed as the first layer.

With the cathode-ray tube of the invention, an indium oxide transparent conductive film is put on the outer face of the face plate for low resistance. The outer face of the conductive face plate is connected to ground by the terminals, thus a potential occurring on the outer face of the face panel is relieved to ground efficiently, thereby forming a field shield for screening human bodies from the alternating field in the VLF band of 2 kHz to 400 kHz which has the possibility of passing through the face panel of the CRT and adversely affecting the human bodies.

The glare proof function for preventing light reflection can also be provided by adding a reflection prevention film to the indium oxide transparent conductive film or by using a spray method to add a silica film thereto.

### Brief Description of the Drawings

In the accompanying drawings:
Figure 1 is a side view of a conventional cathode-ray tube;
Figure 2 is a side view of a cathode-ray tube according to a first embodiment of the invention;
Figure 3 is an enlarged sectional view of a cross section of portion A in Figure 2;
Figure 4 is an elevational view of the cathode-ray tube according to the first embodiment of the invention;
Figure 5 is a graph of alternating field (VLF band) and horizontal scanning frequency characteristics measured with the cathode-ray tube shown in Figure 2 with interterminal resistance values of an indium oxide transparent conductive film being 3 x 10³ Ω and 5 x 10³ Ω; and
Figure 6 is drawings showing various modifications of a face plate 14 whose outer face is coated with a transparent conductive film.

### Best Mode for Carrying Out the Invention

Referring now to the accompanying drawings, there are shown preferred embodiments of the invention.

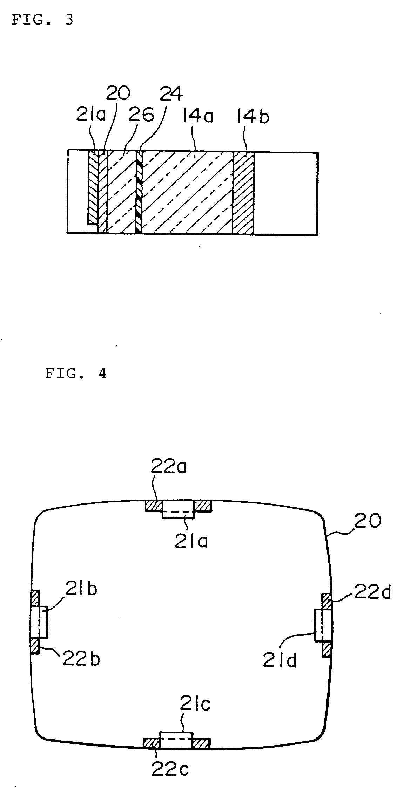

As shown in Figures 2 and 3, the outer face of a face panel 14 of a CRT according to a first embodiment of the invention is coated with a conductive film 20, and terminals 22, connection points to ground, are disposed at the margins of the conductive film 20. Thus, a potential occurring on the outer face of the face panel is relieved through the terminals 22 to ground. The resistance value between the terminals 22 of the CRT according to the first embodiment is 5 x 10³ Ω or less when horizontal scanning frequency 30 kHz or higher is used; 3 x 10³ Ω or less when horizontal scanning frequency 45 kHz or higher is used.

The configuration of the CRT according to the embodiment is described in detail.

The CRT according to the embodiment is made up of a neck section 16 containing an electron gun, a deflecting yoke 17, a funnel section 23, a face plate 14, and a high voltage button 15. The reflecting yoke 17 is connected via a lead wire 17a to a reflection power supply. The electron gun of the neck section 16 is connected via a lead wire 16a to a drive power supply. The high voltage button 15 is connected via a lead wire 15a to a high voltage power supply.

The surface of a glass panel 14a forming the face plate 14 is coated with a transparent conductive film of indium oxide 20 which is a transparent conductive film according to the embodiment. In the embodiment, the indium oxide transparent conductive film 20 is applied to a shield panel 26 made of glass which is stuck on the surface of the glass panel 14a by ultraviolet (UV) cured resin having substantially the same refractive index as glass.

Further, terminals 22 to connect the indium oxide transparent film 20 and ground are disposed at the glass panel margins. In the embodiment, each of the terminals 22 is connected electrically to ground by an explosion-proof band 18 and copper foil tape 21. Since the explosion-proof band 18 is grounded, a potential occurring on the outer face of the glass panel 14a is relieved through the terminals 22, copper foil tapes 21, and explosion-proof band 18.

In the embodiment, the terminals 22 are located at four places 22a, 22b, 22c, and 22d on the glass panel 11. The copper foil tapes 21 are also located at four places 21a, 21b, 21c, and 21d corresponding to the terminals 22. In the embodiment, each of the resistance values between terminals 22a and 22b, 22b and 22c, 22c and 22d, 22b and 22d, 22a and 22c, and 22a and 22d is adopted to become 5 x 10³ Ω or less when a horizontal scanning frequency 30 kHz or higher is used, and 3 x 10³ Ω or less when a horizontal scanning frequency 45 kHz or higher is used.

In operation, as with the conventional CRT, an electron beam emitted from the electron gun contained in the neck section 16 is reflected electromagnetically by the deflecting yoke 17, and is accelerated by applying a high voltage through a high voltage button 15 to the fluorescent screen 14b disposed on the inner face of the face plate 14. The energy of the electron beam causes the fluorescent screen 14b to be excited, thus causing light emission to output light. With the cathode-ray tube according to the embodiment, when being driven, a high voltage applied to the fluorescent screen 14b of the inner face of the face plate 14 causes the outer face of the face plate 14 to be charged up and an alternating field to be leaked from the face plate 14 of the cathode-ray tube, as with the conventional cathode-ray tube.

However, the cathode-ray tube according to the embodiment is formed with the indium oxide transparent conductive film 20 on the surface of the shield panel 26, and the indium oxide transparent conductive film 20 is connected via the copper foil tapes 21 and the explosion-proof band 18 to ground by the terminals 22 disposed at the panel margins of the shield panel 26. Therefore, the alternating field and charge up occurring on the outer face of the shield panel 26 are collected by a field shield formed by the indium oxide transparent conductive film 20 and then grounded from the indium oxide transparent conductive film 20 via the terminals 22, copper foil tapes 21, and explosion-proof band 18. The outer face of the face plate 14 can screen human bodies from the alternating field (VLF band) otherwise adversely affecting the human bodies.

Generally, in electromagnetic waves emitted from display monitors, the alternating field (VLF band) at 2 kHz to 400 kHz which has the possibility of passing through the face panel of the CRT and adversely affecting the human bodies is mainly emitted from the deflecting yoke. Our experiment results reveal the alternating field values in the VLF band with a conventional charge-resistant CRT, as listed in Table 2.

**Table 2**

| Charge-resistant 16-inch CRT with coating treatment of 2.6 x 10⁹ Ω given to face plate | | |
|---|---|---|
| CRT type | Conventional charge-resistant CRT | |
| Test method | MPR-II | TCO |
| Alternating field VLF band (V/m) | | |
| Horizontal frequency 31 kHz | 2.3 V/m | 5.0 V/m |
| Horizontal frequency 45 kHz | 3.4 V/m | 8.3 V/m |
| Horizontal frequency 64 kHz | 4.8 V/m | 12.0 V/m |

The experiment also reveals that the alternating field (VLF band) at the conventional charge-resistant CRT depends on horizontal scanning frequencies, namely, as the horizontal scanning frequency rises, the alternating field (VLF band) value increases.

On the other hand, with the cathode-ray tube according to the embodiment, an indium oxide transparent conductive film is put on the outer face of the face plate of the CRT to give conductivity for low resistance and the outer face is grounded, thereby forming a field shield of the indium oxide transparent conductive film for screening the alternating field and charge up occurring on the outer face of the shield panel 26. By making the interterminal resistance value of the indium oxide transparent conductive film a predetermined value or less, leakage of the alternating field can be suppressed to the standard values or less specified on the international standards of (MPR-11), (TCO), etc., for providing a sufficient screen effect.

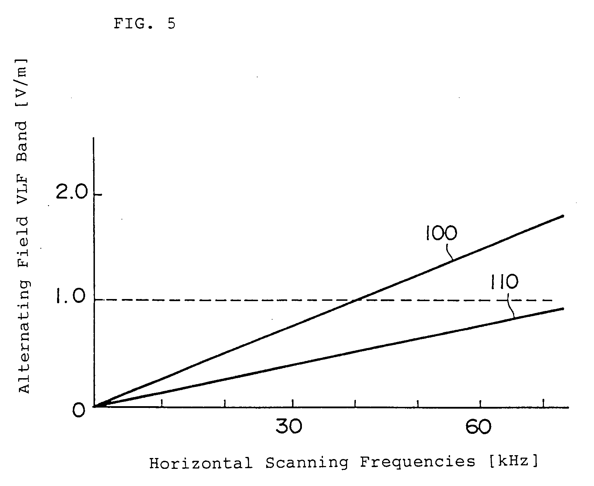

Figure 5 is a graph showing the experiment results of measurement with the cathode-ray tube according to the embodiment. It is a graph of the alternating field (VLF band) and horizontal scanning frequency characteristics measured with the charge-resistant cathode-ray tube shown in Figure 2 with interterminal resistance values of an indium oxide transparent conductive film being 3 x 10³ Ω and 5 x 10³ Ω. The measurement values are obtained at a place 30 cm distant from the face plate 14 of the cathode-ray tube.

In Figure 5, the line 100 denotes an alternating field (VLF band) vs horizontal scanning frequency characteristic when the interterminal resistance value of the indium oxide transparent conductive film is 5 x 10³ Ω. As seen in the figure, if the interterminal resistance value of the indium oxide transparent conductive film is set to 5 x 10³ Ω or less, the alternating field (VLF band) measured around the horizontal scanning frequency 35 kHz is lower than 1.0 V/m and satisfies the TCO standard listed in Table 1.

The line 110 shown in Figure 5 denotes an alternating field (VLF band) vs horizontal scanning frequency characteristic when the interterminal resistance value of the indium oxide transparent conductive film is 3 x 10³ Ω. As seen in the figure, even if the horizontal scanning frequency of the cathode-ray tube according to the embodiment is used near 50 kHz, if the interterminal resistance value of the indium oxide transparent conductive film is 3 x 10³ Ωor less, the alternating field (VLF band) measured is considerably lower than 1.0 V/m and easily satisfies the TCO standard listed in Table 1.

Thus, human bodies can be sufficiently screened from the alternating field otherwise adversely affecting the human bodies by setting the interterminal resistance value of the indium oxide transparent conductive film to 5 x 10³ Ω or less when the horizontal scanning frequency 30 kHz or higher is used and by setting the interterminal resistance value of the indium oxide transparent conductive film to 3 x 10³ Ω or less when the horizontal scanning frequency 45 kHz or higher is used.

Various modifications of how to coat the face plate 14 with a transparent conductive film can be adopted.

### Second embodiment:

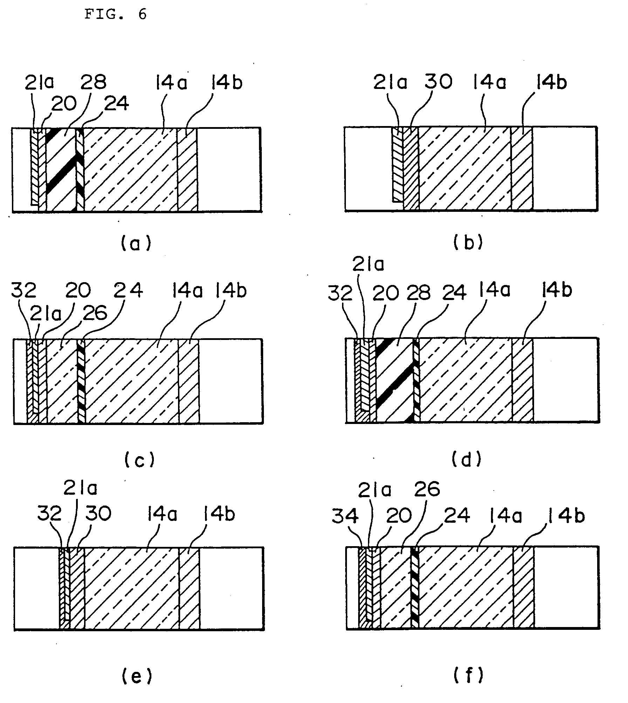

With the cathode-ray tube with the outer face of the face plate 14 coated with the shield panel 26 made of glass described above as the first embodiment, a cathode-ray tube according to a second embodiment can adopt, for example, a shield panel 28 made of plastic in place of the shield panel 26 made of glass in the first embodiment, as shown in Figure 6(a). In the second embodiment, the plastic shield panel 28 coated with a transparent conductive film 20 is stuck on a glass panel 14a. The plastic used for the shield panel 28 has substantially the same refractive index as glass and the shield panel 28 is stuck on the glass panel 14a with ultraviolet (UV) cured resin having substantially the same refractive index as glass. The cathode-ray tube according to the second embodiment can also provide the same alternating field screening function as the cathode-ray tube with the shield panel 26 in the first embodiment by grounding the transparent conductive film 20 via copper foil tapes 21.

### Third embodiment:

According to a third embodiment of the invention, paint with fine grains of indium oxide as a filler is applied directly to a face plate of a cathode-ray tube . If paint with fine grains of indium oxide as a filler is applied directly to the face plate, a transparent conductive film 30 is formed directly on a glass panel 14a, as shown in Figure 6(b). Therefore, unlike the first and second embodiments, the third embodiment need not adopt the shield panel 26 or 28 mentioned above.

The cathode-ray tube according to the third embodiment is also formed with the transparent conductive film 30 so that the resistance value between terminals 22 located at face margins of the face plate to which paint with fine grains of indium oxide as a filler is applied is set to 5 x 10³ Ω or less when the horizontal scanning frequency of 30 kHz or higher is used or 3 x 10³ Ω or less when the horizontal scanning frequency of 45 kHz or higher is used. In the cathode-ray tube according to the third embodiment, the transparent conductive film 30 is grounded via copper foil tapes 21.

In our experiment, the cathode-ray tube with paint containing fine grains of indium oxide as a filler applied directly to the face plate 14 was also be able to provide the same alternating field screening effect as the indium oxide transparent conductive film 20 formed on the surface of the shield panel 26 or 28 mentioned above.

### Fourth embodiment:

According to a fourth embodiment of the invention, the outer face of a face plate 14 of a cathode-ray tube is coated with a reflection prevention film together with an indium oxide transparent conductive film 20. In the fourth embodiment of the invention, reflection prevention film 32 is formed on the transparent conductive film 20, as shown in Figure 6(c). The transparent conductive film 20 is grounded via copper foil tapes 21 connected to terminals 22 located in margins. The cathode-ray tube according to the fourth embodiment has a non-reflection function or glare proof function with the reflection prevention film for relieving eyestrain when the CRT is used as well as the alternating field screening function as in the first to third embodiments.

The reflection prevention film 32 can also be formed on a plastic shield panel 28 shown in Figure 6(d), in place of a glass shield panel 26 shown in Figure 6(c), to provide a similar effect. Like the third embodiment, a transparent conductive film 30 can also be directly applied with no shield panel, as shown in Figure 6(e), to provide a similar effect. The reflection prevention film 32 makes it possible to remove the disadvantages involved in the use of an indium oxide transparent conductive film 20 or 30. That is, when the interterminal resistance value is less than 100 Ω, the indium oxide transparent conductive films in the embodiments described above may be slightly colored or increase in gloss in nature, but these disadvantages can be relieved by forming the reflection prevention film in the fourth embodiment.

Thus, if a cathode-ray tube containing at least one indium oxide transparent conductive layer adopts a reflection prevention film, the disadvantages involved in the adoption of indium oxide transparent conductive film 20 or 30 as transparent conductive film of the invention can be removed as well as viewer's eyestrain being relieved. The reflection prevention film may be formed as a part of the panel or may be stuck directly on the surface of the face plate 14 as a film.

### Fifth embodiment:

A cathode-ray tube according to a fifth embodiment of the invention contains an additional SiO₂ (silica) film 34 formed by a spray method after formation of an indium oxide transparent conductive film, as shown in Figure 6(f). The silica film 34 can also be formed in any of the first to fourth embodiments described above. The cathode-ray tube according to the fifth embodiment of the invention is provided with both the alternating field screening function and glare proof effect mentioned above by using the spray method for forming the SiO₂ (silica) film 34 on the indium oxide transparent conductive film of a shield panel 26.

As described in the fourth embodiment above, when the interterminal resistance value of the indium oxide transparent conductive film is less than 100 Ω, the transparent conductive film will be slightly colored or increase in gloss in nature, but the disadvantages are relieved by using the spray method for forming the SiO₂ (silica) film in the fifth embodiment.

### Field of Industrial Application

As described above, with the cathode-ray tube of the invention, an indium oxide transparent conductive film is applied to the outer face of the face plate for low resistance and the transparent conductive film is grouded for form a field shield and a reflection prevention film is added to the indium oxide transparent conductive film or a silica film is added by the spray method, thus human bodies can be screened from the alternating field in the VLF band of 2 kHz to 400 kHz which has the possibility of passing through the face panel of the CRT and adversely affecting the human bodies, and the reflection prevention function or glare proof function to relieve eyestrain can also be provided.

## Claims

1. A charge-resistant cathode-ray tube comprising:
(a) a transparent conductive film with which an outer face of a face plate of said cathode-ray tube is coated;
(b) a plurality of terminals disposed at margins of said transparent conductive film for connection to ground; and
(c) said transparent conductive film with a resistance value between said terminals being 5 x 10³ Ω or less when a horizontal scanning frequency of 30 kHz or higher is used and 3 x 10³ Ω or less when a horizontal scanning frequency of 45 kHz or higher is used.

2. The charge-resistant cathode-ray tube as claimed in claim 1 wherein said transparent conductive film with which the outer face of the face plate of said cathode-ray tube is coated is an indium oxide transparent conductive film.

3. The charge-resistant cathode-ray tube as claimed in claim 1 wherein said transparent conductive film with which the outer face of the face plate of said cathode-ray tube is coated comprises paint containing fine grains of indium oxide as a filler applied directly to the face plate face.

4. The charge-resistant cathode-ray tube as claimed in claim 1 further including a reflection prevention film with which the outer face of the face plate of said cathode-ray tube is coated.

5. The charge-resistant cathode-ray tube as claimed in claim 1 wherein a glare proof treatment is further applied by a spray method after said transparent conductive film is formed.

6. The charge-resistant cathode-ray tube as claimed in claim 2 wherein a glare proof treatment is further applied by a spray method after said indium oxide transparent conductive film is formed.

7. The charge-resistant cathode-ray tube as claimed in claim 3 wherein a glare proof treatment is further applied by a spray method after said transparent conductive film is formed.

8. A charge-resistant cathode-ray tube comprising:
(a) a shield panel with which an outer face of a face plate of said cathode-ray tube is coated;
(b) a transparent conductive film formed on said glass panel;
(c) a plurality of terminals disposed at margins of said shield panel for connection to ground; and
(d) said transparent conductive film with a resistance value between said terminals being 5 x 10³ Ω or less when a horizontal scanning frequency of 30 kHz or higher is used and 3 x 10³ Ω or less when a horizontal scanning frequency of 45 kHz or higher is used.

9. The charge-resistant cathode-ray tube as claimed in claim 8 wherein said transparent conductive film with which the outer face of said face plate of said cathode-ray tube is coated is an indium oxide transparent conductive film.

10. The charge-resistant cathode-ray tube as claimed in claim 9 further including a reflection prevention film with which the outer face of the face plate of said cathode-ray tube is coated.

11. The charge-resistant cathode-ray tube as claimed in claim 9 wherein a glare proof treatment is further applied by a spray method after said transparent conductive film is formed.

12. A charge-resistant cathode-ray tube comprising a transparent conductive film such as a conductive glass panel on an outer face of a face plate, wherein a resistance value of said transparent conductive film between terminals disposed at margins of said face plate is 5 x 10³ Ω or less when a horizontal scanning frequency 30 kHz or higher is used.

13. A charge-resistant cathode-ray tube comprising a transparent conductive film such as a conductive glass panel on an outer face of a face plate, wherein a resistance value of said transparent conductive film between terminals disposed at margins of said face plate is 3 x 10³ Ω or less when a horizontal scanning frequency of 45 kHz or higher is used.

14. The cathode-ray tube as claimed in claim 12 or 13 wherein a panel member to which conductivity is given by an indium oxide transparent conductive film is put on the face plate face.

15. The cathode-ray tube as claimed in claim 12 or 13 wherein paint containing fine grains of indium oxide as a filler is applied directly to the face plate face.

16. The cathode-ray tube as claimed in claim 14 wherein a panel member formed with a reflection prevention film containing at least one indium oxide transparent conductive layer is put on the face plate face.

17. The cathode-ray tube as claimed in claim 14 or 15 wherein a glare proof treatment is applied by a spray method after indium oxide film is formed as a first layer.
